# EUROPEAN PATENT APPLICATION

(11) **EP 4 848 123 A1**
(43) Date of publication of application: **02.12.2026**
(21) Application number: 26181590.6
(22) Date of filing: 28.05.2026
(51) Int. Cl.: G06F 21/57, G06F 21/62, G06N 20/00, G06Q 30/0251, G06Q 30/0601

(54) **EVALUATING PRIVACY RISKS IN PRIVACY-PRESERVING SYSTEMS**

(30) Priority: 28.05.2025 US 202519220599
(71) Applicant: Bytedance Technology Ltd., KY1 - 1205 Grand Cayman Cayman Islands (KY)
(72) Inventor: Zhang, Shikun, Culver City, 90230 (US); Ding, Jingxian, Los Angeles, 90066 (US); Du, Jian, Culver City, 90230 (US)
(74) Representative: Grünecker Patent- und Rechtsanwälte PartG mbB

(57) **Abstract**

Example methods (200), systems (1000) and computer-readable media for evaluating privacy risks in privacy-preserving systems. One example method includes: identifying (202) a privacy-preserving service product that provides targeted recommendations to users based on an ML model trained by privacy-protected training data provided by a data provider; evaluating (204) data security of the privacy-preserving service product to determine if a criterion of data security is met for the privacy-preserving service product; evaluating (206) a first risk of re-identifying at least one of one or more users using the privacy-preserving service product; evaluating (208) a second risk of personalizing at least one of the one or more users using the privacy-preserving service product; and outputting (210) an evaluation report that indicates the first risk of re-identifying at least one of the one or more users and the second risk of personalizing at least one of the one or more users.

## Description

### TECHNICAL FIELD

The present disclosure relates to computer-implemented methods and systems for evaluating privacy risks in privacy-preserving systems.

### BACKGROUND

As privacy regulations and industry standards continue to evolve in response to growing concerns around data protection, many product and service providers are pivoting towards privacy-centric solutions to process their users' data pertinent to privacy-preserving services. A range of privacy-centric products and services can deliver personalized and targeted products or services to consumers while simultaneously ensuring their privacy is not violated.

### SUMMARY

The present disclosure involves methods and systems and computer-readable media for evaluating privacy risks in privacy-preserving systems. A first example method includes: identifying a privacy-preserving service product that provides targeted recommendations to users based on a machine learning (ML) model trained by privacy-protected training data provided by a data provider; evaluating data security of the privacy-preserving service product to determine if a criterion of data security is met for the privacy-preserving service product; evaluating a first risk of re-identifying at least one of one or more users using the privacy-preserving service product; evaluating a second risk of personalizing at least one of the one or more users using the privacy-preserving service product; and outputting an evaluation report that indicates the first risk of re-identifying at least one of the one or more users and the second risk of personalizing at least one of the one or more users.

The previously described implementation is implementable using a computer-implemented method; a non-transitory, computer-readable medium storing computer-readable instructions to perform the computer-implemented method; and a computer system including a computer memory interoperably coupled with a hardware processor configured to perform the computer-implemented method or the instructions stored on the non-transitory, computer-readable medium. These and other embodiments may each optionally include one or more of the following features.

In some implementations, the method further includes: generating one or more first mitigation operations to reduce the first risk of re-identifying at least one of the one or more users based on an identified first risk of re-identifying at least one of the one or more users; and performing the one or more first mitigation operations.

In some implementations, the evaluation report includes the one or more first mitigation operations.

In some implementations, the method further includes: generating one or more second mitigation operations to reduce the second risk of personalizing at least one of the one or more users based on identified second risk of personalizing at least one of the one or more users; and performing the one or more second mitigation operations.

In some implementations, the evaluation report includes the one or more second mitigation operations.

In some implementations, the criterion of data security is based on one or more of a data security standard, regulation, or a system-specific requirement.

In some implementations, the data security includes at least one of access control of the privacy-protected training data or encryption of the privacy-protected training data.

In some implementations, the privacy-protected training data includes conversion data from the data provider, and the conversion data is associated with interactions between the data provider and the one or more users.

In some implementations, the data provider is an advertiser, and the second risk of personalizing at least one of the one or more users is associated with a personalized advertising risk.

In some implementations, the first risk of re-identifying at least one of the one or more users includes a risk associated with membership inference attacks.

In some implementations, the evaluation report includes a result of the evaluating data security that itemizes the criterion of data security and a description of whether, how, and why the criterion of data security is met or not.

In some implementations, the method further includes: in response to determining that the criterion of data security is not met, generating one or more improvement operations to improve the data security of the privacy-preserving service product; and performing the one or more improvement operations.

A second example method includes: obtaining evaluation data obtained from training of a machine learning (ML) model using training data including feature data and corresponding label data, wherein the training of the ML model is performed using vertical federated learning (VFL) between an authorized party of the label data and an unauthorized party of the label data; determining, based on the evaluation data, a threshold for distinguishing one or more positive labels from one or more negative labels in the label data; and evaluating, based on the threshold, a risk of label re-identification associated with the training of the ML model, wherein the label re-identification occurs when the unauthorized party of the label data correctly determines at least one label in the label data.

The previously described implementation is implementable using a computer-implemented method; a non-transitory, computer-readable medium storing computer-readable instructions to perform the computer-implemented method; and a computer system including a computer memory interoperably coupled with a hardware processor configured to perform the computer-implemented method or the instructions stored on the non-transitory, computer-readable medium. These and other embodiments may each optionally include one or more of the following features.

In some implementations, evaluating the risk of label re-identification leakage includes: identifying the one or more positive labels in the label data using the threshold; and evaluating, based on one or more identified positive labels, the risk of label re-identification.

**In** some implementations, the evaluation data includes a ratio of a total number of the one or more positive labels in the label data to a total number of labels in the label data, and determining the threshold includes determining the threshold based on a difference between a predetermined value and the ratio.

**In** some implementations, the evaluation data includes gradient norms of data samples obtained from the training of the ML model, and wherein the method includes: injecting reference data samples with negative labels into the training data to obtain an augmented training data; obtaining the evaluation data obtained from the training of the ML model includes obtaining the evaluation data from the training of the ML using the augmented training data, wherein the evaluation data includes gradient norms of data samples in the augmented training data; and determining the threshold includes determining the threshold to be a largest gradient norm among gradient norms of the reference data samples with negative labels.

In some implementations, evaluating, based on the threshold, the risk of label re-identification includes: determining one or more gradient norms in the gradient norms of data samples in the augmented training data that are larger than or equal to the threshold; identifying one or more labels corresponding to the one or more gradient norms to be positive; and evaluating, based on the identified one or more labels, the risk of label re-identification

In some implementations, the risk of label re-identification includes a recall value and an accuracy value.

In some implementations, evaluating the risk of label re-identification includes evaluating, using an area under precision-recall curve (AUC-PR), the risk of label re-identification.

In some implementations, the authorized party of the label data includes an advertiser, the unauthorized party of the label data includes an advertising platform. In such implementations, evaluating the risk of label re-identification includes evaluating, based on conversion data the advertiser used during the training, the risk of label re-identification.

In some implementations, the ML model includes a model for determining whether to recommend, by the unauthorized party of the label data, a recommendation from the authorized party of the label data.

A third example method includes: training, based on a plurality of data samples from a third-party, a first machine learning (ML) model to obtain a second ML model, wherein the plurality of data samples include user data associated with a plurality of users; removing a subset of data samples from the plurality of data samples to obtain a second plurality of data samples, wherein the subset of data samples are associated with a subset of the plurality of users; training, based on the second plurality of data samples, the first ML model to obtain a third ML model; sending a plurality of requests to the second ML model, wherein each of the plurality of requests is for requesting a list of items recommended by the second ML model; receiving a first list of items recommended by the second ML model, wherein each of the first list of items recommended by the second ML model is a response from the second ML model to a corresponding request in the plurality of requests sent to the second ML model; sending the plurality of requests to the third ML model, wherein each of the plurality of requests is for requesting a list of items recommended by the third ML model; receiving a second list of items recommended by the third ML model, wherein each of the second list of items is a response from the third ML model to a corresponding request in the plurality of requests sent to the third ML model; and evaluating, based on the first list of items recommended by the second ML model and the second list of items recommended by the third ML model, a risk of personalizing at least one user in the subset of the plurality of users.

The previously described implementation is implementable using a computer-implemented method; a non-transitory, computer-readable medium storing computer-readable instructions to perform the computer-implemented method; and a computer system including a computer memory interoperably coupled with a hardware processor configured to perform the computer-implemented method or the instructions stored on the non-transitory, computer-readable medium. These and other embodiments may each optionally include one or more of the following features.

In some implementations, evaluating the risk includes: determining a difference between the first list of items recommended by the second ML model and the second list of items recommended by the third ML model; and measuring a personalization effect based on the difference.

In some implementations, the method further includes: determining overlapping items between top k items of each of the first list of items recommended by the second ML model and the top k items of a corresponding list of the second list of items recommended by the third ML model, wherein k is a positive integer.

In some implementations, the method further includes: sending the plurality of requests to the second ML model for a second time; receiving a third list of items recommended by the second ML model, wherein each of the third list of items is a response from the second ML model to a corresponding request in the plurality of requests sent to the second ML model for the second time. In such implementations, evaluating the risk includes: evaluating, based on (1) the first list of items recommended by the second ML model, (2) the second list of items recommended by the third ML model, and (3) the third list of items recommended by the second ML model, the risk of personalizing at least one user in the subset of the plurality of users.

In some implementations, evaluating the risk includes: evaluating the risk based on (1) a distribution of percentages of overlapping items between the first list of items recommended by the second ML model and the third list of items recommended by the second ML model, and (2) a distribution of percentages of overlapping items between the first list of items recommended by the second ML model and the second list of items recommended by the third ML model.

In some implementations, the plurality of requests are requests sent from the subset of the plurality of users to the second ML model within a predetermined time interval.

In some implementations, the plurality of data samples from the third-party are generated by the third-party during a predetermined period of time.

In some implementations, the subset of the plurality of users are randomly selected from the plurality of users.

In some implementations, the items are ordered in the list according to a predetermined rule.

In some implementations, the items are advertisements, and the third-party is an advertiser.

In some implementations, the plurality of data samples include conversion data of the plurality of users provided by the third-party.

In some implementations, the plurality of data samples include privacy-protected user data associated with the plurality of users.

In some implementations, the second ML model is for providing item recommendation and is trained based on the privacy-protected user data.

The subject matter described in this specification can be implemented in particular embodiments so as to realize one or more of the following advantages. For example, the techniques described in this specification can provide technical solutions to quantitively evaluate various risks involved in privacy-protection systems. For example, the described techniques can leverage data analyses, training data selection, model training and regeneration, data extraction and manipulation, etc. using AI/ML tools to compute metrics for evaluating privacy risks. In some implementations, the techniques described in this specification can benefit stakeholders in the privacy-preserving service ecosystem. For businesses, the techniques can provide a reliable comparison tool to assess their current privacy-preserving service solutions, enabling them to make more informed decisions around product selection and development. For end-users, the techniques can ensure that their data privacy is respected and protected by the different privacy-preserving service products they interact with. The techniques can also benefit regulators by providing an industry-accepted benchmark that complements existing privacy-regulation efforts, enhancing the overall effectiveness of data protection. In some implementations, the techniques described in this specification can provide a detailed analysis of the degree of privacy protection offered by different privacy-preserving service products. The techniques described in this specification can also enable comparison and evaluation of different products and approaches, regarding their respect for user privacy. In some implementations, the techniques described in this specification can assess and quantify the risk of label re-identification during machine model training. The techniques described in this specification can also isolate and evaluate the personalization impact attributable to third-party data.

While generally described as computer-implemented software embodied on tangible media that processes and transforms the respective data, some or all of the aspects may be computer-implemented methods or further included in respective systems or other devices for performing this described functionality. The details of these and other aspects and implementations of the present disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 illustrates an example process for evaluating data privacy risks in a privacy-preserving service product, according to some implementations.
FIG. 2 illustrates a second example process for evaluating data privacy risks in a privacy-preserving service product, according to some implementations.
FIG. 3A illustrates an example process of evaluating the risk of label re-identification during training of a vertical federated learning (VFL) model, according to some implementations.
FIG. 3B illustrates a second example process of evaluating the risk of label re-identification during training of a vertical federated learning (VFL) model, according to some implementations.
FIG. 4A illustrates an example distribution of the norm of the gradient for all the training samples, according to some implementations.
FIG. 4B illustrates an example threshold determined using the injected reference data samples with negative labels, according to some implementations.
FIG. 4C illustrates the example threshold determined in FIG. 4B relative to the true probability density function of the gradient norms of the negative labels and the true probability density function of the gradient norms of the positive labels, according to some implementations.
FIG. 5 illustrates an example with an area under the precision-recall curve (AUC-PR) = 0.8418, according to some implementations.
FIG. 6 illustrates a third example process of evaluating the risk of label re-identification during training of a VFL model, according to some implementations.
FIG. 7 illustrates an example process for evaluating personalization privacy risks in recommendation systems, according to some implementations.
FIG. 8 illustrates an example of a distribution, across recommendation list sets A1, A2, and B in FIG. 7, of the percentages of the number of overlapping recommendations in the top K recommendations between two lists from either A1 and A2 respectively or from A1 and B respectively, according to some implementations.
FIG. 9 illustrates a second example process 900 for evaluating personalization privacy risks in recommendation systems, according to some implementations.
FIG. 10 illustrates a schematic diagram of an example computer system, according to some implementations.

Like reference numbers and designations in the various drawings indicate like elements.

### DETAILED DESCRIPTION

Despite the shift towards privacy preservation in the realm of privacy-preserving products and services, there is a lack of robust, practical, and actionable privacy benchmarks. This disclosure provides techniques that would allow for a detailed analysis of the degree of privacy protection offered by the purportedly privacy-preserving service products (e.g., advertising products). The described techniques can enable meaningful comparison and evaluation of different products and approaches, regarding their respect for user privacy.

The rising demand for consumer data privacy and regulations such as the General Data Protection Regulation (GDPR) and the California Consumer Privacy Act (CCPA) have led to a reassessment of conventional data-sharing methods. One emerging solution is Federated Learning (FL), a machine learning approach where a model is trained across multiple decentralized devices or servers that hold local data, without exchanging them, thus improving privacy. In some cases, FL can allow different parties to collaboratively develop targeted recommendation models without exchanging sensitive information.

In some cases, two types of federated learning include vertical FL and horizontal FL. Vertical Federated Learning (VFL) with model splitting allows typically two participants to jointly train a model, where one party contributes features and the other supplies labels. There may be a possible risk that one party could potentially exploit the shared or exchanged gradients to gain additional information, meant to be private to each party, about the other party's data. Learning those labels could be problematic, as sometimes these labels contain sensitive personal information or there might be tracking restrictions in place that classify learning such cross-site labels as non-compliant. Existing attack methods and relevant metrics often lack practicality, as they assume attackers possess full knowledge of all ground truth labels that are unknown to attackers in real life.

Comprehensive privacy regulations such as the GDPR and the CCPA have enabled users to express their preferences for non-personalized services on online platforms. Nonetheless, while users have the option to opt-out of personalized products and/or services, determining the effectiveness of these opt-out choices often presents a complex challenge. Personalization mechanisms in privacy-preserving service products are typically deeply embedded in recommendation models. These models ingest a variety of data from a vast number of users to finely tune their outputs. This makes it difficult to differentiate how much sway a particular user's data has on the final recommendations they receive, versus the influence exerted by the aggregate data of other users upon the recommendation models.

The present disclosure provides robust, actionable privacy techniques to analyze, compare, and evaluate privacy-preserving service products and/or services in terms of privacy protection. The techniques can be used as a reliable model, policy or standard against which the effectiveness of privacy-protecting tools can be measured. The techniques are designed to evaluate essential aspects of privacy preservation, including but not limited to data minimization, transparency, consent, data anonymization/pseudonymization, security, user control, and/or third-party sharing restrictions.

Furthermore, the present disclosure provides techniques to assess the privacy risks associated with VFL, particularly the potential risks of label leakage or re-identification. For example, the proposed techniques can assess and quantify the risk of label leakage during VFL-based training of a model. This involves analyzing how label data may inadvertently be exposed to unauthorized parties during the collaborative training process.

Additionally, the present disclosure provides techniques to evaluate and quantify the extent to which a user's third- party personal data influences the resulting recommendations that this user sees. Through rigorous design and data-driven verification methods, the proposed techniques can isolate and evaluate the personalization impact attributable to third-party data, and thus create the potential to affirmatively verify that recommendation models are effectively implementing user privacy preferences.

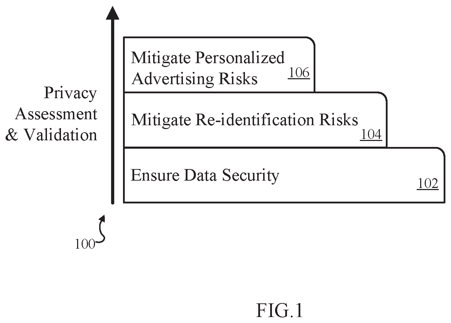

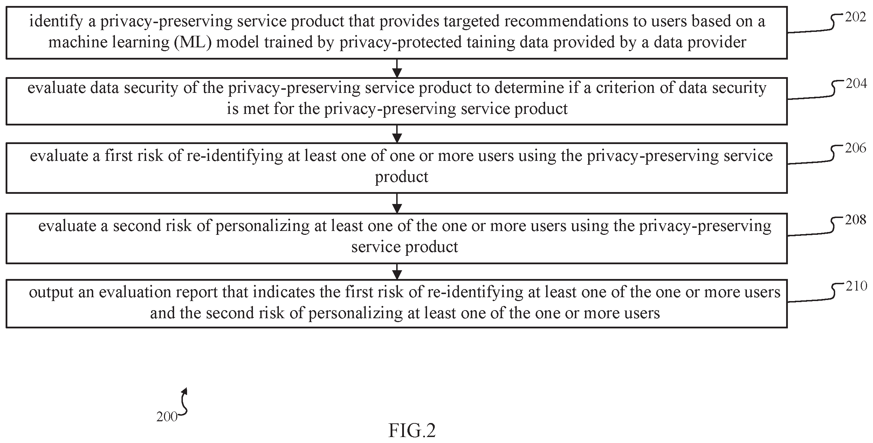

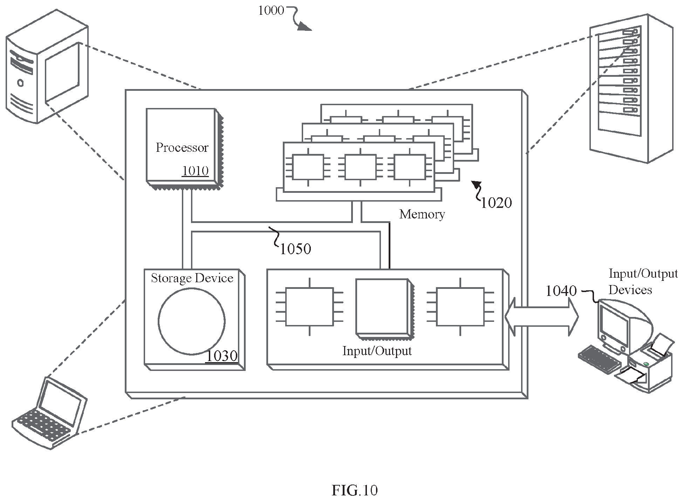

FIG. 1 illustrates an example process 100 for evaluating data privacy risks in a privacy-preserving service product. Process 100 can be performed by any suitable device or system as described herein, for example, according to the example techniques described with respect to FIGS. 2-9. For convenience, process 100 will be described as being performed by a computer system. An example computer system is computer system 1000 shown in FIG. 10. The operations shown in process 100 may not be exhaustive and that other operations can be performed as well before, after, or in between any of the illustrated operations. Further, some of the operations may be omitted, performed simultaneously, or in a different order than shown in FIG. 1. In some implementations, some of the operations may be performed by or one or more components of a device or a system.

At 102, a computer system evaluates data security of a privacy-preserving service product to determine if a criterion of data security is met for the privacy-preserving service product. In general, a privacy-preserving service product can provide as a product one or more of a service (e.g., implemented by software, firmware, and/or hardware), and/or goods. In some implementations, the privacy-preserving service product can include providing targeted recommendations to users based on a machine learning (ML) model trained by privacy-protected training data provided by a data provider. As an example, the privacy-preserving service product can be a privacy-preserving advertising product. In some cases, the targeted recommendations can include recommendations of one or more of good or service, for example, for a specific user, consumer, or customer. In some implementations, the privacy-preserving service product can be provided by a service provider (e.g., an advertiser or advertising platform) using computer-implemented software, firmware, and/or hardware.

The computer system can evaluate whether the privacy-preserving service product complies with data encryption standards, secure transmission protocols, and/or access control measures. The computer system can also assess the effectiveness of anonymization and data storage practices. The evaluation can be performed using a series of automated checks against common security vulnerabilities, following industry best practices and one or more data security regulations, for example, the GDPR's data security requirements. In some cases, the data security includes at least one of access control of the privacy-protected training data or encryption of the privacy-protected training data.

At 104, the computer system evaluates a risk of re-identifying at least one of one or more users using the privacy-preserving service product. In some implementations, the re-identification risk can include the risk of identifying or recover sensitive or private information (e.g., names, addresses, incomes of individuals and/or organizations) from anonymized or pseudonymized data. In some implementations, the sensitive or private information can be defined, for example, according to a protocol or standards or customized by a system. The computer system can evaluate the likelihood of re-identification through various means, such as cross-referencing datasets or exploiting weaknesses in anonymization techniques, such as membership inference attacks (e.g., in vertical federated learning). The GDPR emphasizes minimizing the risk of re-identification and requires that organizations apply appropriate safeguards to prevent the identification of individuals from anonymized data.

**In** some implementations, evaluating the re-identification risk is also important in the context of personalized products and/or services, where data aggregation and profiling could lead to inadvertent exposure of sensitive information. In some cases, the privacy-protected training data can include conversion data from the data provider (e.g., an advertiser), and the conversion data can be associated with interactions between the data provider and the one or more users. In some cases, the computer system can generate one or more mitigation operations to reduce the risk of re-identifying at least one of the one or more users based on the identified first risk of re-identifying at least one of the one or more users, and perform the one or more mitigation operations.

**In** some implementations, the computer system can output an evaluation report that indicates the risk of re-identifying at least one of the one or more users and/or the one or more mitigation operations. In some implementations, the computer system can perform operations at 104 after performing operations at 102 to determine that a criterion of data security has been met for the privacy-preserving service product. In some implementations, the computer system can skip operations at 104 if operations at 102 determine that a criterion of data security has not been met for the privacy-preserving service product.

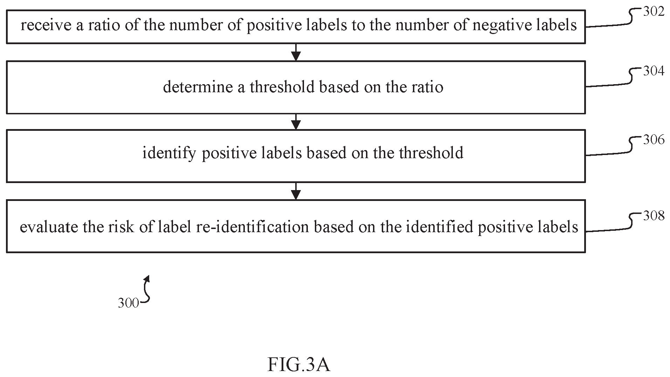

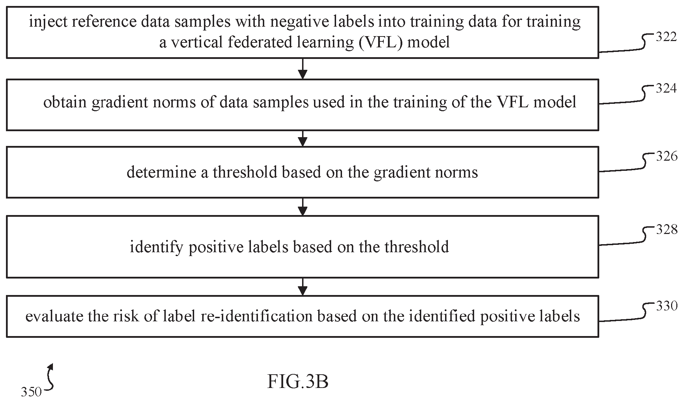

Example techniques for evaluating the re-identification risk include processes 300 and 350, which can evaluate the risk of label re-identification during training of a vertical federated learning (VFL) model described in FIGS. 3A and 3B respectively. Additional or different techniques for evaluating the re-identification risk can be used.

At 106, the computer system evaluates a risk of personalizing at least one of one or more users using the privacy-preserving service product. In some implementations, the risk of personalizing at least one of one or mor users is about determining the extent to which third-party data associated with the one or more users affects the recommendations the one or more users receive from the privacy-preserving service product, for example, the extent to which the transaction histories of the one or more users, as included in the third-party data associated with the one or more users and used during the training of the privacy-preserving service product, affect the recommendations in the lists of recommendations that the one or more users receive from the privacy-preserving service product and that may potentially be seen by the one or more users.

In some implementations, the computer system evaluates how well the privacy-preserving service product limits the collection and use of personal data for targeting purposes. Personalized products and/or services can pose a significant privacy concern, as they rely on profiling users based on their online behaviors, preferences, and/or demographic information. In some implementations, the computer system can ensure that personalized products and/or services comply with privacy laws such as the GDPR, as well as privacy features such as Apple^{®}'s App Tracking Transparency (ATT). ATT requires user consent before tracking across apps and websites, meaning personalized products and/or services need to be designed to respect user preferences and ensure transparency in data collection and usage. As a specific example, the data provider can be an advertiser, and the risk of personalizing at least one of the one or more users can be associated with a personalized advertising risk where the personal data of a user is used for targeted advertising.

In some cases, the computer system can generate one or more mitigation operations to reduce the risk of personalizing at least one of the one or more users based on the identified risk of personalizing at least one of the one or more users. In some implementations, the computer system can output an evaluation report that indicates the risk of personalizing at least one of the one or more users and/or the one or more mitigation operations. In some implementations, the computer system can perform the one or more mitigation operations.

In some implementations, the computer system can perform operations at 106 after performing operations at 104 to determine that the risk of re-identifying at least one of one or more users using the privacy-preserving service product is lower than a predetermined threshold. In some implementations, the computer system can skip operations at 106 after operations at 104 determine that the risk of re-identifying at least one of one or more users using the privacy-preserving service product is higher than a predetermined threshold.

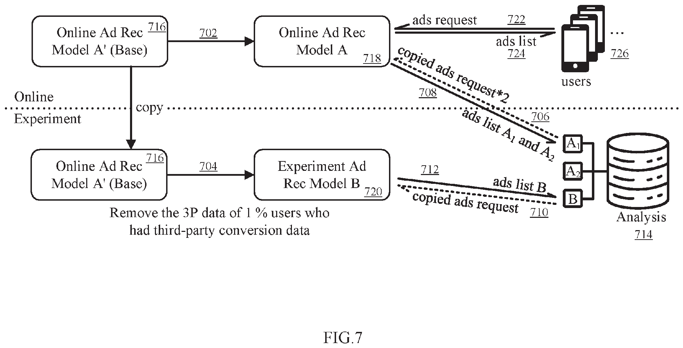

Example techniques for evaluating a risk of personalizing users include process 700 that can evaluate personalization privacy risks in recommendation systems described in more detail in FIG. 7. Additional or different techniques for evaluating the risk of personalizing users can be used.

FIG. 2 illustrates a second example process 200 for evaluating data privacy risks in a privacy-preserving service product. Process 200 can be performed by any suitable device or system as described herein, for example, according to the example techniques described with respect to FIGS. 1 and 3-9. For convenience, process 200 will be described as being performed by a computer system. An example computer system is computer system 1000 shown in FIG. 10. The operations shown in process 200 may not be exhaustive and that other operations can be performed as well before, after, or in between any of the illustrated operations. Further, some of the operations may be omitted, performed simultaneously, or in a different order than shown in FIG. 2. In some implementations, some of the operations may be performed by or one or more components of a device or a system.

At 202, a computer system identifies a privacy-preserving service product (e.g., the privacy-preserving service product described with respect to FIG. 1) that provides targeted recommendations (e.g., the targeted recommendations described with respect to FIG. 1) to users (e.g., the users described with respect to FIG. 1) based on a machine learning (ML) model (e.g., the ML model described with respect to FIG. 1) trained by privacy-protected training data e.g., the privacy-protected training data described with respect to FIG. 1) provided by a data provider (e.g., the data provider described with respect to FIG. 1).

At 204, the computer system evaluates data security (e.g., the data security described with respect to FIG. 1) of the privacy-preserving service product to determine if a criterion of data security (e.g., the criterion of data security described with respect to FIG. 1) is met for the privacy-preserving service product. In some implementations, the data security can be evaluated based on multiple criteria of data security. In some implementations, techniques for evaluating and/or validating data security (e.g., the security of a database, the security of a certain aspect of a code, the security of access control, the security of logging, the security of encryption, etc.) can be used. In some implementations, more than one technique can be used to meet an assessment objective. In some implementations, a combination of techniques can be used to achieve an in-depth security assessment while maintaining an acceptable level of risk to systems and networks.

In some implementations, in response to determining that a criterion of data security is not met, the computer system generates one or more improvement operations to improve the data security of the privacy-preserving service product, for example, to help the privacy-preserving service product meet the criterion of data security. For example, if one or more criteria of data encryption are not met, the one or more improvement operations can include recommendations and correction measures to ensure that data security risks are mitigated or reduced to an acceptable level, consistent with the service product's stated security and privacy claims.

As another example, in response to determining that a criterion of access control is not met, the computer system generates one or more improvement operations that include recommendations and correction measures to enhance access control measures such as implementing access control policies for certain files, and/or access control for API access tokens.

As another example, in response to determining that a criterion of logging is not met, the computer system generates one or more improvement operations that include recommendations and correction measures to maintain logs documenting technical security of the network, such as to ensure logs include one or more of the following, where applicable:

Logs that contain all authentication attempts, whether successful or failed,

System event logs that include system and service startups and shutdowns, installation of unauthorized software, file accesses, security policy changes, account changes (e.g., account creation, deletion, privilege assignment, etc.), and elevated privileges,

Intrusion-detection and prevention logs that capture malicious actions or other improper use,

Application logs recording unauthorized connection attempts, changes to accounts or privileges, and overall application/database activity,

Antivirus logs that flag failed updates and other indications of outdated signatures and software,

Security logs, especially from patch-management tools and certain intrusion detection system (IDS) and intrusion prevention system (IPS) products, that document known vulnerable services and applications.

As another example, in response to determining that a criterion of file integrity check is not met, the computer system generates one or more improvement operations that include recommendations and correction measures to compare system files against a reference database created using a secure system stored offline.

As another example, in response to determining that a criterion of code review security is not met, the computer system generates one or more improvement operations that include recommendations and correction measures to review specific code to ensure security requirement relevant to the system at hand (e.g., certain personal information does not leave a sandbox environment). In some implementations, one or more improvement operations can include recommendations of static code review to include one or more of the following, where applicable:
Uses automated tests
Uses code scanners to catch critical bugs,
Uses heuristic tools scan for hardcoded secrets, passwords, and private encryption keys,
Uses heuristic tools to flag code segments that may merit deeper manual reviews,
Reviews code to ensure that it perform one or more of the following:
   Performs bounds checks, initializes data values, and restricts sensitive transactions, functions, and data to only authorized users,
   Limits failed log-in attempts,
   Locks sessions after inactivity,
   Ends sessions automatically after defined conditions,
   Has an organizational system architecture that promotes effective information security;
   Avoids hard-coded memory locations,
   Encrypts sensitive data in transit and at rest,
   Uses standard services and application program interfaces (APIs),
   Has secure default configurations,
   Provides up-to-date documented interfaces.

In some implementations, one or more improvement operations can include recommendations of dynamic code review to include one or more of the following, where applicable:
Uses automated tests,
Runs programs with built-in safety checks enabled.

Relies on the programming languages' native checks and protections.

Enables hardware and operating system security and vulnerability mitigation mechanisms, for example, to enable one or more of the following functions:
Run-time buffer overflow detection,
Run-time bounds checks for containers,
Address space layout randomization (ASLR),
Increased reliability of stack overflow detection,
Stack smashing protection,
Control flow integrity protection,
Rejection of potentially unsafe format string arguments,
Rejection of missing function prototypes,
Reporting of many other warnings and errors,
For software written in languages that are not memory-safe, using automated source code transformations or compiler techniques that enforce memory safety,
Creating of "black box" test cases, e.g., from specifications, input boundary analysis, and those motivated by threat modeling,
Creating of code-based (structural) test cases. For example, when tests are run, the software may record which branches, blocks, function calls, etc., in the code are exercised or "covered." Tools then analyze this information to compute metrics. Add cases as necessary to reach at least 80% coverage,
Use of test cases that were designed to catch previous bugs, or
Run of a fuzzer, which performs automatic active testing. Fuzzers create huge numbers of inputs during testing. If the software runs a web service, run a web application scanner, too.

As another example, in response to determining that a criterion of penetration testing and vulnerability scan is not met, the computer system generates one or more improvement operations that include recommendations and correction measures based on one or more of the following guidance, where appliable:
If conducting an internal security assessment, consider implementing a screen between certain specific data and certain specified personnel located in a specific region,
In accordance with the rest-of-world operations standards,
For external security assessments that carry legal risk, have legal counsel direct the security assessment under privilege,
Assessors should be provided network access either onsite, through an encrypted virtual private network (VPN), or via a dedicated, trusted connection,
If the tools used in the assessment require network or domain administrator privileges, create new administrator accounts for use during assessments. Monitor these accounts and disable or delete them when the assessment ends,
Give every assessor a unique account; or
Consider whether testing should be performed on production systems or similarly configured non-production environment.

At 206, the computer system evaluates a first risk (e.g., the re-identification risk described with respect to FIG. 1) of re-identifying at least one of one or more users using the privacy-preserving service product.

At 208, the computer system evaluates a second risk (e.g., the risk of personalizing at least one of the one or more users described with respect to FIG. 1) of personalizing at least one of the one or more users using the privacy-preserving service product.

At 210, the computer system outputs an evaluation report (e.g., the evaluation report described with respect to FIG. 1) that indicates the first risk of re-identifying at least one of the one or more users and the second risk of personalizing at least one of the one or more users. In some implementations, the evaluation report also includes results of the data security evaluation. In some implementations, the evaluation report can itemize each criterion of data security and a description of whether, how, and why such a criterion is met or not. As an example, results of the data security evaluation can be represented in the format of one or more checklists and/or relevant comments. For example, a checklist can be used to determine whether the security controls surrounding an object are adequate to meet the necessary representations of a specified project. As an example, a checklist can include a table listing multiple different types of security checks regarding, for example, access control, logging, encryption, code review, penetration testing and vulnerability scans, etc. The different types of security checks can include respective checks to determine, for example, whether one or more access control policies for certain aspects of the privacy-preserving service product have been developed that grants access only to verified and authorized users, whether it has been confirmed that no administrative API can access data inside certain restricted area on the underlying host, whether a log of all active hosts within the network is maintained, whether administrative-level modification of access logs is prohibited, whether certain encryption scheme is in place, whether manual review of certain specific code has been reviewed, whether static (code-based) and/or dynamic (e.g., by running the program) analysis has been performed to confirm no non-compliant or insecure code is introduced into the product, whether a vulnerability scan has been conducted within the network, whether file integrity has been checked, etc. In some implementations, the checklist can also include additional details regarding the security checks, whether and when (e.g., time and date) the security checks have been performed and validated, who performed the validation, and any other validation comments, etc.

In some implementations, the computer system generates one or more first mitigation operations (e.g., the mitigation operations described with respect to FIG. 1) to reduce the first risk of re-identifying at least one of the one or more users based on the identified first risk of re-identifying at least one of the one or more users, and performs the one or more first mitigation operations.

In some implementations, the computer system generates one or more second mitigation operations to reduce the second risk of personalizing at least one of the one or more users based on the identified second risk of personalizing at least one of the one or more users, and performs the one or more second mitigation operations.

In some implementations, the evaluation report includes one or more of the one or more first mitigation operations, the one or more second mitigation operations, and the one or more improvement operations.

In some implementations, the criterion of data security is based on one or more data security of a data security standard, a regulation, or a system-specific requirement. Example standards and regulations can be, e.g., the one or more data security standards and/or regulations described with respect to FIG. 1 or the checklist example. The system-specific requirement can include one or more criteria specific to the system at hand. For example, if the system generates logs, the logs should be immutable. One of the system-specific requirements can be the logs cannot be altered.

In some implementations, the data security includes at least one of access control of the privacy-protected training data or encryption of the privacy-protected training data.

In some implementations, the privacy-protected training data includes conversion data (e.g., the conversion data described with respect to FIG. 1) from the data provider, and the conversion data is associated with interactions between the data provider and the one or more users.

In some implementations, the data provider is an advertiser, and the second risk of personalizing at least one of the one or more users is associated with a personalized advertising risk.

FIG. 3A illustrates an example process 300 of evaluating the risk of label re-identification during training of a vertical federated learning (VFL) model. Process 300 can be performed by any suitable device or system as described herein, for example, according to the example techniques described with respect to FIGS. 1-2 and 4-9. For convenience, process 300 will be described as being performed by a computer system. An example computer system is computer system 1000 shown in FIG. 10. The operations shown in process 300 may not be exhaustive and that other operations can be performed as well before, after, or in between any of the illustrated operations. Further, some of the operations may be omitted, performed simultaneously, or in a different order than shown in FIG. 3A. In some implementations, some of the operations may be performed by or one or more components of a device or a system.

At 302, a computer system receives a ratio of the number of positive labels to the total number of labels used in the training of the VFL model, where the ratio is associated with training the VFL model jointly by an authorized party of label data used in the training and an unauthorized party of the label data. In some implementations, training data used during the training of the VFL model can include label data used by the authorized party of the label data. The label data can include positive labels and negative labels. Examples of the label data can include conversion data. An example of the conversion data is the occurrence of transactions, e.g., whether purchases are made by one or more users at the authorized party of the label data. A positive label in the label data indicates that a transaction occurred (e.g., a purchase was made). A negative label in the label data indicates that a transaction does not occur (e.g., no purchase was made). The training data can also include feature data used by the unauthorized party of the label data during the training of the VFL model. The label data can be valuable to the authorized party of the label data, and the unauthorized party of the label data does not have access to the label data. The risk of label re-identification refers to the risk of the unauthorized party of the label data re-identifying (or correctly determining) at least one label in the label data based on the training of the VFL model.

In some implementations, the authorized party of the label data can be an advertiser, and the unauthorized party of the label data can be an advertising platform. The advertiser can provide advertisements (or recommendations) of its products to the advertising platform, and the advertising platform can recommend one or more advertisements from the advertiser to one or more users of the advertising platform.

In some implementations, gradients from both positive labels and negative labels are used. In some implementations, when training a VFL model, only gradients associated with positive labels are sent from the authorized party of label data (e.g., an advertiser) to the unauthorized party of the label data (e.g., an advertising platform). In some cases, some negative labels can be mixed with positive labels during model training to improve the model's accuracy and privacy.

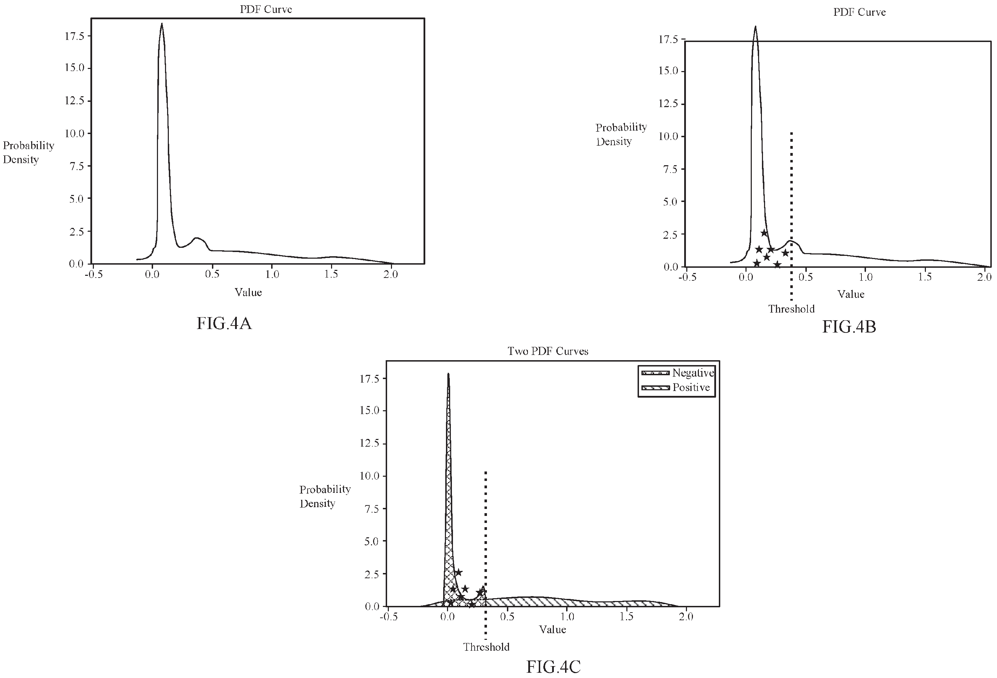

At 304, the computer system determines a threshold based on the ratio received at 302. In some implementations, the threshold can be used to distinguish one or more positive labels from one or more negative labels in the label data. In some implementations, the threshold can be determined by subtracting a predetermined value from the ratio received at 302. For example, if the ratio received at 302 is t%, then the threshold can be determined to be t%-e%, where e% is a predetermined value. In other words, the computer system determines that the top t%-e% of labels (ordered by the gradient norms) used in the training of the VFL model are positive labels, and the rest of the labels used in the training are negative labels. e% is strictly smaller than t%. As an example, e% is determined based on the tolerance or buffer for inaccurate predictions. Using FIG. 4C as an example, if, for instance, t% is 5%, the area representing the positive labels is 5%. If the threshold is at the illustrated place in FIG. 4C, that means that the positive area on the left of the threshold is not predicted to be positive (that can be seen as the "error" rate for the positive labels missed). The area on the right of the threshold can be considered t%-e%. The closer e is to t, the higher the accuracy of prediction, but the recall will be lower.

At 306, the computer system identifies one or more positive labels in the labels used in the training of the VFL model, based on the threshold. In some implementations, the computer system identifies the one or more positive labels by determining that t%-e% of the labels used in the training of the VFL model are positive labels (e.g., the labels associated with the top t%-e% of the gradients are considered positive labels).

At 308, the computer evaluates the risk of label re-identification based on the one or more positive labels identified at 306. In some implementations, label re-identification occurs when the unauthorized party of the label data correctly determines at least one label in the label data, for example, when at least one of the one or more positive labels identified at 306 is in fact a positive label used by the authorized party of the label data during the training of the VFL model. In some implementations, if t% is 5%, and the predetermined value e% is 2%, the unauthorized party of the label data can recall 36% of labels with 100% accuracy.

In some implementations, because different thresholds can result in varying levels of precision and recall for label re-identification, an area under the precision-recall curve (AUC-PR) can be used to evaluate the performance of a label re-identification framework, e.g., a framework implemented by process 300, and select a threshold based on the desired balance between precision and recall, adapting to different assessment frameworks. AUC-PR is described in more detail below in the description of FIG. 3B.

FIG. 3B illustrates a second example process 350 of evaluating the risk of label re-identification during training of a VFL model. Process 350 can be performed by any suitable device or system as described herein, for example, according to the example techniques described with respect to FIGS. 1-2 and 4-9. For convenience, process 350 will be described as being performed by a computer system. An example computer system is computer system 1000 shown in FIG. 10. The operations shown in process 350 may not be exhaustive and that other operations can be performed as well before, after, or in between any of the illustrated operations. Further, some of the operations may be omitted, performed simultaneously, or in a different order than shown in FIG. 3B. In some implementations, some of the operations may be performed by or one or more components of a device or a system.

At 322, a computer system injects reference data samples with negative labels into training data for training a VFL model jointly by an authorized party of label data used in the training and an unauthorized party of the label data. The training data containing the injected reference data samples can be referred to as augmented training data.

In some implementations, the training data before the injection of the reference data samples with negative labels can include label data used by the authorized party of the label data to generate gradients that can be passed from the authorized party of the label data to the unauthorized party of the label data during the training of the VFL model. The training data before the injection of the reference data samples with negative labels can also include feature data used by the unauthorized party of the label data during the training of the VFL model. In some implementations, the reference data samples with negative labels can be injected by the unauthorized party of the label data in order to evaluate the risk of label re-identification.

At 324, the computer system obtains gradient norms of data samples used in the training of the VFL model. In some implementations, a gradient norm is the norm (e.g., an Euclidean norm) of a gradient corresponding to a data sample used by the authorized party of the label data during the training of the VFL model. The gradient is a function of a label corresponding to the data sample. Therefore, by passing the gradient instead of the corresponding label to the unauthorized party of the label data during the training of the VFL model, the authorized party of the label data prevents the label from being revealed to the unauthorized party of the label data. FIG. 4A illustrates an example distribution of the norm of the gradient for all the training samples. The X-axis represents gradient norm, and the Y-axis represents probability density function of the gradient norms for all the training samples.

At 326, the computer system determines a threshold based on the gradient norms obtained at 324. In some implementations, the threshold can be determined as the largest gradient norm among gradient norms corresponding to the injected reference data samples with negative labels. FIG. 4B illustrates an example threshold determined using the injected reference data samples with negative labels. FIG. 4B shows the determined threshold relative to the probability density function in FIG. 4A and to the gradient norms of the injected reference data samples with negative labels, which are represented by the stars in FIG. 4B. As shown in FIG. 4B, the threshold can be determined as largest gradient norm among gradient norms corresponding to the injected reference data samples with negative labels.

In some implementations, the threshold can be determined based on the ratio of the number of positive labels to the total number of labels used in the training of the VFL model. In some implementations, the gradient norms can be sorted in an ascending order, and the threshold can be determined as a threshold separating the number of positive labels of gradient norms and the number of negative labels of gradient norms in the sorted norms. For example, if the number of positive labels is 1000 and the number of negative labels is 10, all the gradient norms of 1010 can be sorted in an ascending order. The threshold can be determined as the 10^{th} gradient norm in the sorted 1010 gradient norms.

At 328, the computer system identifies positive labels based on the threshold determined at 326. In some implementations, the computer system determines one or more gradient norms in the gradient norms of data samples in the augmented training data that are larger than or equal to the threshold. Then the computer system identifies one or more labels corresponding to the one or more gradient norms to be positive. FIG. 4C illustrates the example threshold determined in FIG. 4B relative to the true probability density function of the gradient norms of the negative labels and the true probability density function of the gradient norms of the positive labels.

At 330, the computer system evaluates the risk of label re-identification based on the one or more positive labels identified at 328. In some implementations, label re-identification occurs when the unauthorized party of the label data correctly determines at least one label in the label data, for example, when at least one of the one or more positive labels identified at 328 is in fact a positive label used by the authorized party of the label data during the training of the VFL model. In some cases, using 500 reference data samples with negative labels and the threshold determined at 326 can result in a recall of 66% of labels with 79% accuracy.

In some implementations, because different thresholds can result in varying levels of precision and recall for label re-identification, an area under the precision-recall curve (AUC-PR) can be used to evaluate the performance of a label re-identification framework, e.g., a framework implemented by process 300 or 350, and select a threshold based on the desired balance between precision and recall, adapting to different assessment frameworks.

In some implementations, AUC-PR is a summary statistic that measures the area under the precision-recall curve. This area results in a single value that summarizes the performance of a framework across all possible classification thresholds. AUC-PR takes values between 0 and 1. For example, AUC-PR = 1 indicates perfect precision and recall for all thresholds (i.e., the framework perfectly classifies all positive instances). AUC-PR = 0 indicates that the framework is completely incorrect, always predicting the wrong class. AUC-PR = 0.5 implies that the framework performs no better than random guessing when the positive and negative samples are balanced, where the positive label ratio is 0.5. When the positive label ratio is 1/20 = 0.05, AUR-PR = 0.05 implies that the framework performs no better than random guessing (since the correct guess rate is 0.05).

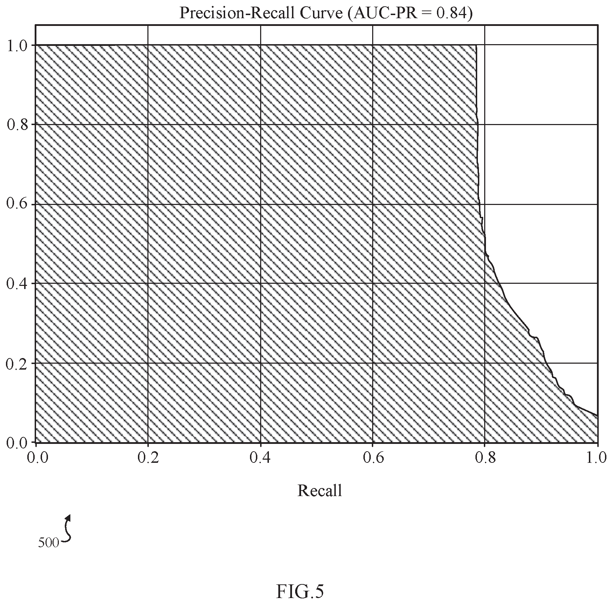

In some implementations, AUC-PR can be used as an objective benchmark for evaluating the risk of label re-identification. FIG. 5 illustrates an example with AUC-PR = 0.8418. As described earlier, the closer AUC-PR is to 1, the greater the risk of label re-identification. As in the example in FIG. 5, AUC-PR = positive ratio (the true value for this is about 0.05) represents that framework performs no better than random guessing. AUC-PR=0 would mean perfect protection since all samples were classified wrong.

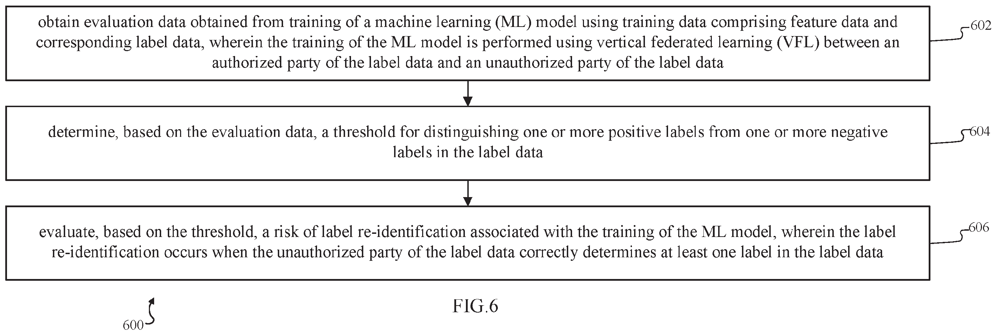

FIG. 6 illustrates a third example process 600 of evaluating the risk of label re-identification during training of a VFL model. Process 600 can be performed by any suitable device or system as described herein, for example, according to the example techniques described with respect to FIGS. 1-5 and 7-9. For convenience, process 600 will be described as being performed by a computer system. An example computer system is computer system 1000 shown in FIG. 10. The operations shown in process 600 may not be exhaustive and that other operations can be performed as well before, after, or in between any of the illustrated operations. Further, some of the operations may be omitted, performed simultaneously, or in a different order than shown in FIG. 6. In some implementations, some of the operations may be performed by or one or more components of a device or a system.

At 602, a computer system obtains evaluation data (e.g., a ratio of the number of positive labels to the total number of labels described with respect to FIG. 3A or gradient norms of data samples described with respect to FIG. 3B) obtained from training of a machine learning (ML) model (e.g., VFL model described with respect to FIG. 3A or 3B) using training data (e.g., training data described with respect to FIG. 3A or 3B) including feature data (e.g., feature data used by the unauthorized party of the label data described with respect to FIG. 3A or 3B) and corresponding label data (e.g., label data used by the authorized party of the label data described with respect to FIG. 3A or 3B), where the training of the ML model is performed using vertical federated learning (VFL) between an authorized party of the label data (e.g., the authorized party of the label data described with respect to FIG. 3A or 3B) and an unauthorized party of the label data (e.g., the unauthorized party of the label data described with respect to FIG. 3A or 3B).

At 604, the computer system determines, based on the evaluation data, a threshold (e.g., the threshold described with respect to FIG. 3A or 3B) for distinguishing one or more positive labels (e.g., one or more positive labels described with respect to FIG. 3A or 3B) from one or more negative labels (e.g., one or more negative labels described with respect to FIG. 3A or 3B) in the label data.

At 606, the computer system evaluates, based on the threshold, a risk of label re-identification (e.g., risk of label re-identification described with respect to FIG. 3A or 3B) associated with the training of the ML model, where the label re-identification occurs when the unauthorized party of the label data correctly determines at least one label in the label data.

In some implementations, evaluating the risk of label re-identification leakage includes identifying the one or more positive labels in the label data using the threshold, and evaluating, based on the one or more identified positive labels, the risk of label re-identification.

In some implementations, the evaluation data includes gradient norms of data samples (e.g., gradient norms of data samples described with respect to FIG. 3B) obtained from the training of the ML model, and the method includes injecting reference data samples with negative labels (e.g., reference data samples with negative labels described with respect to FIG. 3B) into the training data to obtain an augmented training data (e.g., augmented training data described with respect to FIG. 3B), obtaining the evaluation data obtained from the training of the ML model includes obtaining the evaluation data from the training of the ML using the augmented training data, where the evaluation data includes gradient norms of data samples in the augmented training data, and determining the threshold includes determining the threshold to be a largest gradient norm among gradient norms of the reference data samples with negative labels.

In some implementations, evaluating, based on the threshold, the risk of label re-identification includes determining one or more gradient norms in the gradient norms of data samples in the augmented training data that are larger than or equal to the threshold, identifying one or more labels corresponding to the one or more gradient norms to be positive, and evaluating, based on the identified one or more labels, the risk of label re-identification.

In some implementations, the risk of label re-identification includes a recall value (e.g., percentage of recalled labels described with respect to FIG. 5) and an accuracy value (e.g., accuracy of the percentage of recalled labels described with respect to FIG. 3B).

In some implementations, evaluating the risk of label re-identification includes evaluating, using an area under the precision-recall curve (AUC-PR) (e.g., AUC-PR described with respect to FIG. 3B), the risk of label re-identification.

In some implementations, the authorized party of the label data includes an advertiser (e.g., advertiser described with respect to FIG. 3A), the unauthorized party of the label data includes an advertising platform (e.g., advertising platform described with respect to FIG. 3A), and evaluating the risk of label re-identification includes evaluating, based on conversion data (e.g., conversion data described with respect to FIG. 3A) the advertiser provided during the training, the risk of label re-identification.

In some implementations, the ML model includes a model leveraging the label data provided by the authorized party (e.g., an advertiser) to train a model used by the unauthorized party (e.g., an advertising platform) to provide recommendations (described with respect to FIG. 3A). In some implementations, if the risk of label re-identification is higher than a first threshold, the authorized party of label data (e.g., an advertiser) may require improved data privacy of the unauthorized party. In some instances, if the re-identification risk is too high (e.g., higher than a second threshold), the authorized label party can choose not to share the data to train the model anymore.

FIG. 7 illustrates an example process 700 for evaluating personalization privacy risks in recommendation systems. An example of a recommendation system is an advertisement recommendation system provided by an advertising platform. Process 700 can be performed by any suitable device or system as described herein, for example, according to the example techniques described with respect to FIGS. 1-6 and 8-9. For convenience, process 700 will be described as being performed by a computer system. An example computer system is computer system 1000 shown in FIG. 10. The operations shown in process 700 may not be exhaustive and that other operations can be performed as well before, after, or in between any of the illustrated operations. Further, some of the operations may be omitted, performed simultaneously, or in a different order than shown in FIG. 7. In some implementations, some of the operations may be performed by or one or more components of a device or a system.

At 702, a computer system trains a machine learning (ML) model 716 to obtain an ML model 718. An example of the ML model 716 is an online advertisement recommendation model A' (also referred to as a baseline ML model) shown in FIG. 7. Accordingly, an example of the ML model 718 is an online advertisement recommendation model A shown in FIG. 7. The ML model 716 can be an existing ML model that has been trained previously before the training in 702 is performed. In some implementations, the training can be performed over a predetermined period of time, for example, 14 days.

In some implementations, third-party data (also referred to as conversion data, privacy-protected user data, or labels) associated with multiple users that form a total user base and generated by a third-party can be used as training labels to train the ML model 716 during 702. In some cases, the third-party can be an advertiser that has the records of the purchase history of each of the multiple users in the total user base, and each data sample in the third-party data indicates whether a particular user in the total user base made a purchase of a product from the advertiser.

In some implementations, after ML model 718 is obtained from the training of ML model 716, users in the total user base can send recommendation requests to ML model 718 to obtain lists of recommendations recommended by ML model 718. An example of the recommendations is advertisements of one or more products. The products in the lists of advertisements can be from the aforementioned third-party advertiser. FIG. 7 shows a subset 726 of users in the total user base that have sent recommendation requests (e.g., advertisement requests) 722 to ML model 718 within a predetermined time interval, for example, in a 24-hour period. In some implementations, the users in subset 726 can be randomly selected from the total user base. The recommendation requests 722 sent by the subset 726 to ML model 718 can be recorded from actual recommendation requests made by users in subset 726. For each of the recommendation requests sent by a user in the subset 726, ML model 718 returns a list of recommendations (e.g., advertisement list) 724 to the user. In some cases, recommendations (e.g., advertisements) in the list of recommendations are ranked (or ordered) accordingly to a predetermined rule, with a higher ranking of a recommendation in the list corresponding to a higher possibility that the user will accept the recommendation (e.g., click on the advertisement). In some cases, the subset 726 includes users that are a portion, e.g., X%, of the users in the total user base.

In some implementations, evaluating personalization privacy risks is about determining the extent to which the third-party data associated with users in the subset 726 affects the recommendations the users in the subset 726 receive from ML model 718, for example, the extent to which the purchase histories of the users in the subset 726, as included in the third-party data associated with the users in the subset 726 and used during the training of ML model 716 to obtain model 718, affect the advertisements in the lists of advertisements that the users in the subset 726 receive from ML model 718 and that may potentially be seen by the users in the subset 726.

At 704, the computer system trains ML model 716 to obtain an ML model 720. In some implementations, the computer system can remove from the aforementioned third-party data corresponding to the total user base, a subset of third-party data associated with users in the subset 726, and use the resulting reduced third-party data as training labels to train the ML model 716 to obtain the ML model 720. In some implementations, the training of model 716 to obtain model 720 can be performed over the same predetermined period of time during which model 716 is trained to obtain model 718.

At 706, the computer system sends to ML model 718, the aforementioned recommendation requests (e.g., advertisement requests) 722 that were sent to ML model 718 from users of subset 726.

At 708, in response to receiving the recommendation requests 722, ML model 718 returns, for each of the recommendation requests 722, a list of recommendations (e.g., advertisement list). The combination of the lists of recommendations in response to all requests in the recommendation requests 722 forms a recommendation list set (e.g., advertisement list set) A1 in FIG. 7. The aforementioned operations performed at 706 and 708 to generate the recommendation list set A1 form an inference operation of ML model 718 using the recommendation requests 722 as input to ML model 718. In some cases, each list in the recommendation list set A1 can have a predetermined maximum number of items (e.g., recommendations or advertisements).

In some implementations, at 706, the computer system sends to ML model 718, for a second time, the aforementioned recommendation requests (e.g., advertisement requests) 722 that were sent to ML model 718 from users of subset 726.

In some implementations, at 708, in response to receiving, for a second time, the recommendation requests 722, ML model 718 returns, for each of the recommendation requests 722 sent for the second time, a list of recommendations (e.g., advertisement list). The combination of the lists of recommendations in response to all requests in the recommendation requests 722 sent for the second time forms recommendation list set (e.g., advertisement list set) A2 in FIG. 7. The aforementioned operations performed at 706 and 708 to generate the recommendation list set A2 form a second inference operation of ML model 718 using the recommendation requests 722 as input to ML model 718. In some cases, each list in the recommendation list set A2 can have a predetermined maximum number of items (e.g., recommendations or advertisements).

In some implementations, the recommendation list sets A1 and A2 are generated via 706 and 708 to account for instability of the inference process of ML model 718, when evaluating personalization privacy risks in recommendation systems.

At 710, the computer system sends to ML model 720, the aforementioned recommendation requests (e.g., advertisement requests) 722 that were sent to ML model 718 from users of subset 726.

At 712, in response to receiving the recommendation requests 722, ML model 720 returns, for each of the recommendation requests 722, a list of recommendations (e.g., advertisement list). The combination of the lists of recommendations in response to all requests in the recommendation requests 722 forms a recommendation lists set (e.g., advertisement list set) B in FIG. 7. The aforementioned operations performed at 710 and 712 to generate the recommendation list set B form an inference operation of ML model 720 using the recommendation requests 722 as input to ML model 720. In some implementations, each list in the recommendation list set B can have a predetermined maximum number of items (e.g., recommendations or advertisements).

In some implementations, recommendations (e.g., advertisements) in each list in the recommendation list sets A1, A2, and B are ranked (or ordered) accordingly to a common predetermined rule, with a higher ranking of a recommendation in the list corresponding to a higher possibility that the user receiving the recommendation will accept the recommendation (e.g., click on the advertisement).

At 714, the computer system processes (1) the recommendation list sets B and one of A1 and A2, or (2) the recommendation list sets A1, A2, and B, to evaluate a risk of using the subset of third-party data associated with users in subset 726 to personalize at least one user in subset 726. For example, the computer system can process the recommendation list sets B and one of A1 and A2 to determine the effect of the subset of third-party data associated with users in subset 726 on the recommendations (e.g., advertisements) that users in subset 726 see.

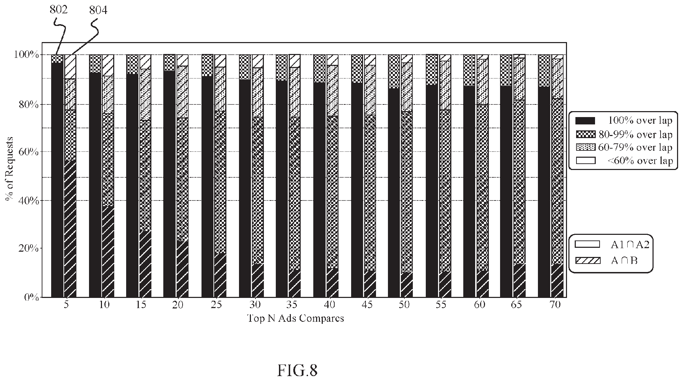

In some implementations, as described above, for each recommendation request in recommendation requests 722, there are three lists of returned recommendations (e.g., advertisements), respectively, from the recommendation list sets A1, A2, and B. The computer system can select the top K recommendations (e.g., advertisements) in each of the three lists, where K is a positive integer, and determine (1) a percentage of the number of overlapping recommendations in the top K recommendations between the two lists from A1 and B (or between the two lists from A2 and B) respectively, and/or (2) a percentage of the number of overlapping recommendations in the top K recommendations between the two lists from A1 and A2 respectively. A distribution of the overlapping recommendations can then be determined, for each K up to the total number of items in a list, across all sets of three recommendation lists (corresponding to all requests in recommendation requests 722) from the recommendation list sets A1, A2, and B. The distribution can indicate the risk of using the subset of third-party data associated with users in subset 726 to personalize at least one user in subset 726, as described in FIG. 8 next. As described earlier, in some cases, this risk is associated with the extent to which the third-party data associated with users in the subset 726 affects the recommendations the users in the subset 726 receive from the baseline ML model 716. An example of evaluation the risk is described using FIG. 8 next.

FIG. 8 illustrates an example of a distribution, across recommendation list sets A1, A2, and B in FIG. 7, of the percentages of the number of overlapping recommendations in the top K recommendations between two lists from either A1 and A2 respectively or from A1 and B respectively. The distribution for the A1 vs. A2 case for a particular K, for example, the distribution bar 802 for K=5 case, indicates the stability of ML model 716. The distribution for the A1 and B case for a particular K, for example, the distribution bar 804 for K=5 case, indicates the effect on the recommendations (e.g., advertisements) that users in subset 726 see, due to the subset of third-party data associated with users in subset 726 being removed from the training data when ML model 716 is trained. For example, the less the 100% overlapping recommendation cases or the more the lower percentage overlapping recommendation cases in the overall distribution, the higher the risk of using the subset of third-party data associated with users in subset 726 to personalize at least one user in subset 726. As to the stability of ML model 716, the more the 100% overlapping recommendation cases or the less the lower percentage overlapping recommendation cases in the overall distribution, the higher the stability of ML model 716.

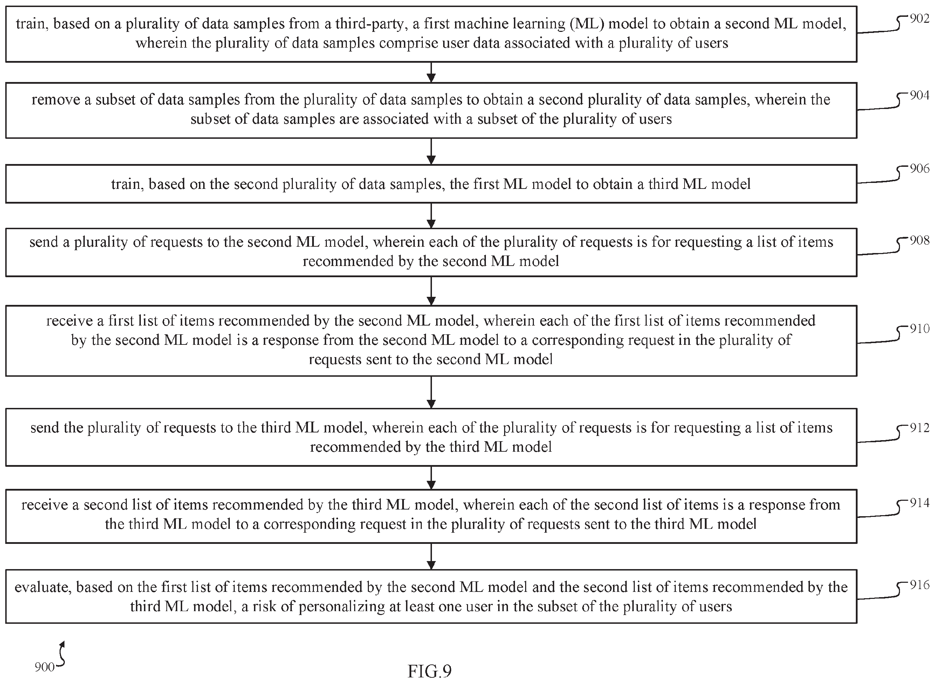

FIG. 9 illustrates a second example process 900 for evaluating personalization privacy risks in recommendation systems. An example of a recommendation system is an advertisement recommendation system provided by an advertising platform. Process 900 can be performed by any suitable device or system as described herein, for example, according to the example techniques described with respect to FIGS. 1-8. For convenience, process 900 will be described as being performed by a computer system. An example computer system is computer system 1000 shown in FIG. 10. The operations shown in process 900 may not be exhaustive and that other operations can be performed as well before, after, or in between any of the illustrated operations. Further, some of the operations may be omitted, performed simultaneously, or in a different order than shown in FIG. 9. In some implementations, some of the operations may be performed by or one or more components of a device or a system.

At 902, a computer system trains, based on multiple data samples (e.g., third-party data described with respect to FIG. 7) from a third-party (e.g., an advertiser described with respect to FIG. 7), a first machine learning (ML) model (e.g., ML model 716) to obtain a second ML model (e.g., ML model 718), where the multiple data samples include user data (e.g., third-party data described with respect to FIG. 7) associated with multiple users (e.g., users in the total user base described with respect to FIG. 7).

At 904, the computer system removes a subset of data samples (e.g., a subset of third-party data associated with users in the subset 726 described with respect to FIG. 7) from the multiple data samples to obtain a second multiple data samples (e.g., the reduced third-party data described with respect to FIG. 7), where the subset of data samples are associated with a subset of the multiple users (e.g., users in the subset 726).

At 906, the computer system trains, based on the second multiple data samples, the first ML model to obtain a third ML model (e.g., ML model 720).

At 908, the computer system sends multiple requests (e.g., recommendation requests 722) to the second ML model, where each of the multiple requests is for requesting a list of items (e.g., a list in recommendation list set A1) recommended by the second ML model.

At 910, the computer system receives a first list of items (e.g., a list in recommendation list set A1) recommended by the second ML model, where each of the first list of items recommended by the second ML model is a response from the second ML model to a corresponding request in the multiple requests sent to the second ML model.

At 912, the computer system sends the multiple requests to the third ML model, where each of the multiple requests is for requesting a list of items (e.g., a list in recommendation list set B) recommended by the third ML model.

At 914, the computer system receives a second list of items (e.g., a list in recommendation list set B) recommended by the third ML model, where each of the second list of items is a response from the third ML model to a corresponding request in the multiple requests sent to the third ML model.

At 916, the computer system evaluates, based on the first list of items recommended by the second ML model and the second list of items recommended by the third ML model, a risk of personalizing at least one user in the subset of the multiple users.

In some implementations, evaluating the risk includes determining a difference (e.g., different items) between the first list of items recommended by the second ML model and the second list of items recommended by the third ML model; and measuring a personalization effect based on the difference.

Alternatively or additionally, in some implementations, evaluating the risk includes evaluating the risk based on overlapping items (e.g., same recommendations in the top K recommendations between the two lists from A1 and B) between the first list of items recommended by the second ML model and the second list of items recommended by the third ML model. In some implementations, the overlapping items are between top k items of each of the first list of items recommended by the second ML model and top k items of a corresponding list of the second list of items recommended by the third ML model, and k is a positive integer. In some implementations, a higher percentage of the overlapping items (effectively, a lower percentage of the different items) in the top K recommendations indicates a lower risk of personalizing at least one user in the subset of the multiple users.

In some implementations, a percentage of the number of overlapping items over the total number of items can be calculated for each of the users. As an example, if between the first list and second list of the top K ads, 95% of the ads are the same for user A, this indicates that the personalization effect of the second model for user A is small because the third model (trained without this user A's data) produced similar (95%) of the same ads of the second model. In other words, 95 % of the ads recommended to user A by the second model also appear in the list of ads recommended to user A by the third model (the third model was trained without user A's data). This high overlap (95%) suggests that user A's own data provides little additional personalization for user A. This is an example of the personalization effect for one user. FIG. 8 shows the aggregate data for all users. As shown in FIG. 8, As shown in Fig.8, the horizontal x-axis represents the % of overlap and the vertical y-axis represents the % of users/requests that have a particular overlap range X (e.g., 100%, 80-99%, 60-79%, <60%). A higher x value (more overlap) indicates a smaller personalization effect for one user. A higher y value for a specific value of X (e.g., 100%), indicates more users have the specific values of X (e.g., 100% overlap). As shown by 802, the black bar representing 100% overlap. The black bar 's vertical y label is around 98%, meaning that 98% users have overlap of 100%.

In some implementations, the computer system sends the multiple requests to the second ML model for a second time, and receives a third list of items (e.g., recommendation list set A2) recommended by the second ML model, where each of the third list of items is a response from the second ML model to a corresponding request in the multiple requests sent to the second ML model for the second time. Evaluating the risk includes evaluating, based on (1) the first list of items recommended by the second ML model, (2) the second list of items recommended by the third ML model, and (3) the third list of items recommended by the second ML model, the risk of personalizing at least one user in the subset of the multiple users.

In some implementations, evaluating the risk includes evaluating the risk based on (1) a distribution of percentages of overlapping items between the first list of items recommended by the second ML model and the third list of items recommended by the second ML model, and (2) a distribution of percentages of overlapping items between the first list of items recommended by the second ML model and the second list of items recommended by the third ML model. In some implementations, the effect of (2) subtracting the effect of (1) can represent the instability of the second ML model, indicating the relatively true difference between the second and the third ML model, brought by the removed data samples.

In some implementations, the multiple requests are requests sent from the subset of the multiple users to the second ML model within a predetermined time interval (e.g., the predetermined time interval described with respect to FIG. 7).

In some implementations, the multiple data samples from the third-party are generated by the third-party during a predetermined period of time (e.g., the predetermined period of time described with respect to FIG. 7).

In some implementations, the subset of the multiple users are randomly selected from the multiple users.

In some implementations, the items are ordered in the list according to a predetermined rule (e.g., the predetermined rule described with respect to FIG. 7).

In some implementations, the items are advertisements (e.g., the advertisements described with respect to FIG. 7), and the third-party is an advertiser (e.g., the advertiser described with respect to FIG. 7).

In some implementations, the multiple data samples include conversion data (e.g., the conversion data described with respect to FIG. 7) of the multiple users provided by the third-party.

In some implementations, the multiple data samples include privacy-protected user data (e.g., the privacy-protected user data described with respect to FIG. 7) associated with the multiple users.

In some implementations, the second ML model is for providing item recommendation (e.g., recommendations recommended by ML model 718) and is trained based on the privacy-protected user data.

FIG. 10 illustrates a schematic diagram of an example computer system 1000. The system 1000 can be used for the operations described in association with the implementations described herein. For example, the system 1000 may be included in any or all of the server components discussed herein. The system 1000 includes a processor 1010, a memory 1020, a storage device 1030, and an input/output device 1040. The components 1010, 1020, 1030, and 1040 are interconnected using a system bus 1050. The processor 1010 is capable of processing instructions for execution within the system 1000. In some implementations, the processor 1010 is a single-threaded processor. In some implementations, the processor 1010 is a multi-threaded processor. The processor 1010 is capable of processing instructions stored in the memory 1020 or on the storage device 1030 to display graphical information for a user interface on the input/output device 1040.

The memory 1020 stores information within the system 1000. In some implementations, the memory 1020 is a computer-readable medium. The memory 1020 can be a volatile memory unit or a non-volatile memory unit. The storage device 1030 is capable of providing mass storage for the system 1000. The storage device 1030 is a computer-readable medium. The storage device 1030 may be a floppy disk device, a hard disk device, an optical disk device, or a tape device. The input/output device 1040 provides input/output operations for the system 1000. The input/output device 1040 includes a keyboard and/or pointing device. The input/output device 1040 includes a display unit for displaying graphical user interfaces.

The subject matter and the actions and operations described in this specification can be implemented in digital electronic circuitry, in tangibly embodied computer software or firmware, in computer hardware, including the structures disclosed in this specification and their structural equivalents, or in combinations of one or more of them. The subject matter and the actions and operations described in this specification can be implemented as or in one or more computer programs, e.g., one or more modules of computer program instructions, encoded on a computer program carrier, for execution by, or to control the operation of, data processing apparatus. The carrier can be a tangible non-transitory computer storage medium. Alternatively, or in addition to, the carrier can be an artificially generated propagated signal, e.g., a machine-generated electrical, optical, or electromagnetic signal, that is generated to encode information for transmission to suitable receiver apparatus for execution by a data processing apparatus. The computer storage medium can be or be part of a machine-readable storage device, a machine-readable storage substrate, a random or serial access memory device, or a combination of one or more of them. A computer storage medium is not a propagated signal.

The term "data processing apparatus" encompasses all kinds of apparatus, devices, and machines for processing data, including by way of example a programmable processor, a computer, or multiple processors or computers. Data processing apparatus can include special-purpose logic circuitry, e.g., an FPGA (field programmable gate array), an ASIC (application specific integrated circuit), or a GPU (graphics processing unit). The apparatus can also include, in addition to hardware, code that creates an execution environment for computer programs, e.g., code that constitutes processor firmware, a protocol stack, a database management system, an operating system, or a combination of one or more of them.

A computer program can be written in any form of programming language, including compiled or interpreted languages, or declarative or procedural languages; and it can be deployed in any form, including as a stand-alone program, e.g., as an app, or as a module, component, engine, subroutine, or other unit suitable for executing in a computing environment, which environment may include one or more computers interconnected by a data communication network in one or more locations.

The processes and logic flows described in this specification can be performed by one or more computers executing one or more computer programs to perform operations by operating on input data and generating output. The processes and logic flows can also be performed by special-purpose logic circuitry, e.g., an FPGA, an ASIC, or a GPU, or by a combination of special-purpose logic circuitry and one or more programmed computers.

Computers suitable for the execution of a computer program can be based on general or special-purpose microprocessors or both, or any other kind of central processing unit. Generally, a central processing unit will receive instructions and data from a read-only memory or a random-access memory or both. The essential elements of a computer are a central processing unit for executing instructions and one or more memory devices for storing instructions and data. The central processing unit and the memory can be supplemented by, or incorporated in, special-purpose logic circuitry.

Generally, a computer will also include, or be operatively coupled to, one or more mass storage devices, and be configured to receive data from or transfer data to the mass storage devices.

To provide for interaction with a user, the subject matter described in this specification can be implemented on one or more computers having, or configured to communicate with, a display device, e.g., an LCD (liquid crystal display) monitor, or a virtual-reality (VR) or augmented-reality (AR) display, for displaying information to the user, and an input device by which the user can provide input to the computer, e.g., a keyboard and a pointing device, e.g., a mouse, a trackball or touchpad. Other kinds of devices can be used to provide for interaction with a user as well; for example, feedback and responses provided to the user can be any form of sensory feedback, e.g., visual, auditory, speech, or tactile feedback or responses; and input from the user can be received in any form, including acoustic, speech, tactile, or eye tracking input, including touch motion or gestures, or kinetic motion or gestures or orientation motion or gestures. In addition, a computer can interact with a user by sending documents to and receiving documents from a device that is used by the user; for example, by sending web pages to a web browser on a user's device in response to requests received from the web browser, or by interacting with an app running on a user device, e.g., a smartphone or electronic tablet. Also, a computer can interact with a user by sending text messages or other forms of message to a personal device, e.g., a smartphone that is running a messaging application, and receiving responsive messages from the user in return.

This specification uses the term "configured to" in connection with systems, apparatus, and computer program components. That a system of one or more computers is configured to perform particular operations or actions means that the system has installed on it software, firmware, hardware, or a combination of them that in operation cause the system to perform the operations or actions. That one or more computer programs is configured to perform particular operations or actions means that the one or more programs include instructions that, when executed by data processing apparatus, cause the apparatus to perform the operations or actions. That special-purpose logic circuitry is configured to perform particular operations or actions means that the circuitry has electronic logic that performs the operations or actions.

While this specification contains many specific implementation details, these should not be construed as limitations on the scope of what is being claimed, which is defined by the claims themselves, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this by itself should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method (200) for evaluating data privacy risks in a privacy-preserving service product, the method comprising:
identifying (202) a privacy-preserving service product that provides targeted recommendations to users based on a machine learning, ML, model trained by privacy-protected training data provided by a data provider;
evaluating (204) data security of the privacy-preserving service product to determine if a criterion of data security is met for the privacy-preserving service product;
evaluating (206) a first risk of re-identifying at least one of one or more users using the privacy-preserving service product;
evaluating (208) a second risk of personalizing at least one of the one or more users using the privacy-preserving service product; and
outputting (210) an evaluation report that indicates the first risk of re-identifying at least one of the one or more users and the second risk of personalizing at least one of the one or more users.

2. The computer-implemented method (200) of claim 1, further comprising:
generating one or more first mitigation operations to reduce the first risk of re-identifying at least one of the one or more users based on an identified first risk of re-identifying at least one of the one or more users; and
performing the one or more first mitigation operations.

3. The computer-implemented method (200) of claim 2, wherein the evaluation report comprises the one or more first mitigation operations.

4. The computer-implemented method (200) of claim 1, further comprising:
generating one or more second mitigation operations to reduce the second risk of personalizing at least one of the one or more users based on identified second risk of personalizing at least one of the one or more users; and
performing the one or more second mitigation operations.

5. The computer-implemented method (200) of claim 4, wherein the evaluation report comprises the one or more second mitigation operations.

6. The computer-implemented method (200) of claim 1, wherein the criterion of data security is based on one or more of a data security standard, regulation, or a system-specific requirement.

7. The computer-implemented method (200) of claim 1, wherein the data security comprises at least one of access control of the privacy-protected training data or encryption of the privacy-protected training data.

8. The computer-implemented method (200) of claim 1, wherein the privacy-protected training data comprises conversion data from the data provider, and the conversion data is associated with interactions between the data provider and the one or more users.

9. The computer-implemented method (200) of claim 1, wherein the data provider is an advertiser, and the second risk of personalizing at least one of the one or more users is associated with a personalized advertising risk.

10. The computer-implemented method (200) of claim 1, wherein the first risk of re-identifying at least one of the one or more users comprises a risk associated with membership inference attacks.

11. The computer-implemented method (200) of claim 1, wherein the evaluation report comprises a result of the evaluating data security that itemizes the criterion of data security and a description of whether, how, and why the criterion of data security is met or not.

12. The computer-implemented method (200) of claim 1, further comprising:
in response to determining that the criterion of data security is not met, generating one or more improvement operations to improve the data security of the privacy-preserving service product; and
performing the one or more improvement operations.

13. A computer-readable medium storing one or more instructions executable by a computer system to perform operations of any of the computer-implemented method of claims 1-12.

14. A computer-implemented system (1000) comprising:
one or more computers; and
one or more computer memory devices (1020) interoperably coupled with the one or more computers and having machine-readable media storing one or more instructions that, when executed by the one or more computers, cause the computer-implemented system to perform operations of any of the computer-implemented method of claims 1-12.
